# EUROPEAN PATENT SPECIFICATION

(11) **EP 3 138 673 B1**
(45) Date of publication and mention of the grant of the patent: **19.01.2022**
(21) Application number: 16186325.3
(22) Date of filing: 30.08.2016
(51) Int. Cl.: B27B 33/14, A01G 23/091

(54) **A TREE-HANDLING DEVICE, A MULTI-PROCESS MACHINE, A METHOD FOR ARRANGING THE CUTTING OPERATION OF A TREE-HANDLING DEVICE**
BAUMHANDHABUNGSVORRICHTUNG, MULTIPROZESSMASCHINE, VERFAHREN ZUR ANORDNUNG DER SCHNEIDOPERATION EINER BAUMHANDHABUNGSVORRICHTUNG
DISPOSITIF DE GESTION D'ARBRE, MACHINE MULTI-PROCÉDÉS ET PROCÉDÉ DESTINÉ À AGENCER L'OPÉRATION DE COUPE D'UN DISPOSITIF DE GESTION D'ARBRE

(30) Priority: 03.09.2015 FI 20150251; 30.09.2015 FI 20155693; 22.10.2015 FI 20155751; 13.07.2016 FI 20165585; 24.08.2016 FI 20164171 U
(43) Date of publication of application: 08.03.2017
(73) Proprietor: Ketonen, Lauri, 64100 Kristiinankaupunki (FI)
(72) Inventor: Ketonen, Lauri, 64100 Kristiinankaupunki (FI)
(74) Representative: Kespat Oy

(56) References cited:
- CA-A- 949 853
- CN-A- 85 107 323
- CN-U- 204 540 199
- DE-A1- 2 539 445
- US-A- 2 515 550
- US-A1- 2007 125 447
- US-A1- 2014 027 019

## Description

The present invention relates to a tree-handling device, a multi-process machine and a method for arranging the cutting operation of a tree-handling device, as per the preambles of appended claims 1, 8 and 10 respectively.

Such a device, machine and method are known from US2007125447. The chain saw has become established as the cutting device, for example in felling machines making logs for sawmills. Disc saws are also used, but they have the drawback of a great weight and space requirement. Sufficiently rapid cutting is achieved with both of these devices. Therefore splitting, which reduces the quality of sawn goods cannot occur during cutting.

So-called guillotine cutting can also be used with small trees, mainly for energy use. Though energy trees can also be cut using a chain saw, a chain saw is liable to malfunction when used for this purpose.

However, a chain saw has significant safety problems. One of these is the possible breaking of the chain. The high speed of the chain when cutting causes parts of it to be thrown around if it breaks. For this reason the cabs of felling machines must be equipped with windshields as much as 25 - 30 mm-thick. Such a special windshield increases the price of a multi-process machine. Despite this, parts of the chain nevertheless sometimes penetrate the glass, leading even to fatalities. Doubling the speed of the chain quadruples the kinetic energy of the parts.

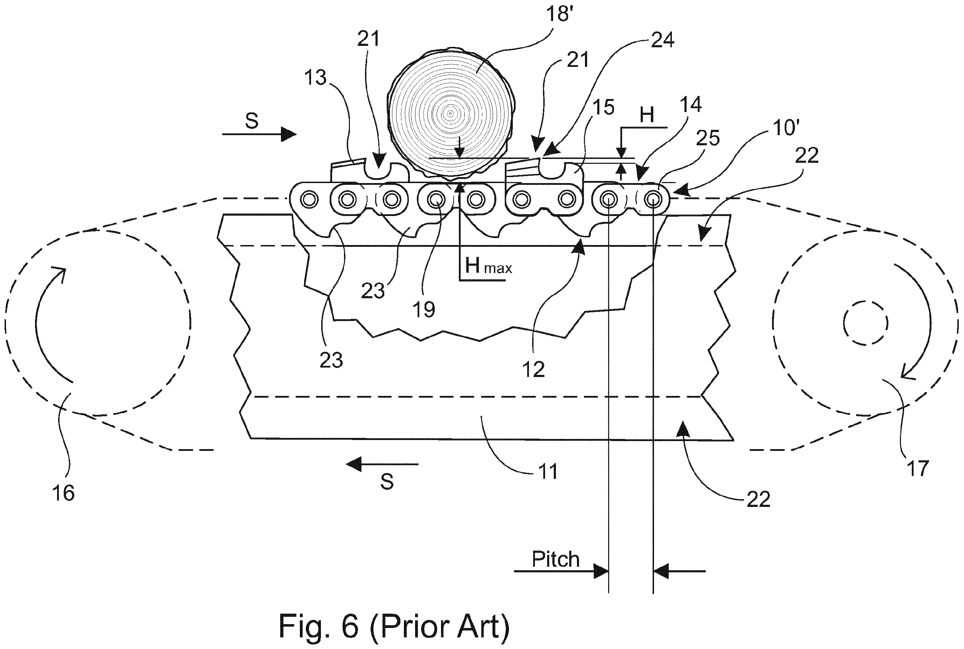

Figure 6 shows cutting taking place using a saw chain 10' according to the prior art. The saw chain 10' has, as parts, a drive link 12, a tooth link 21, and an intermediate link 14. The intermediate link can also be called a side link. Each tooth link 21 includes in this case a cutting edge 24 and now also a so-called depth-adjustment tooth 15. The cutting depth H of the cutting edge 24 is adjusted using the adjustment tooth 15. The saw chain 10' runs in a groove 22 arranged in a rotatable guide bar 11. The saw chain 10' is driven by a drive wheel 16 and the guide bar 11 includes a sprocket 17 arranged at its end for the saw chain 10'. To perform sawing, the guide bar 11 is, in turn, rotated relative to a pivot point arranged for it. The rotation, which can also be called, when in one direction, pressing the guide bar 11 down, and in the opposite direction, lifting it up, takes place, for example, using a hydraulic cylinder (not shown).

Figure 6 also uses reference number 18' to show the object to be cut using the saw chain 10'. It can be, for example, a twig or branch with a diameter of, for example, about 35 mm. As can be seen from the figure, when cutting starts, the twig or branch 18' can be located in the saw chain 10' on top of an intermediate link 14 formed by side plates 25 between the tooth links 21. Such a situation can arise very typically even during felling sawing. Even if the tree being felled is of a large diameter, there can often be branches in its butt area. In addition the branches can be very hard. Before the saw chain 10 starts moving, such a branch or twig can occur at an intermediate link 14 of the saw chain 10'.

When the saw chain 10' starts to move in the direction S from the situation according to Figure 6, as shown in Figure 6, the depth-adjustment tooth 15 sinks partly into the wood 18' and the cutting depth of the cutting edge 24 can be as much as Hₘₐₓ. If the normal depth of the cutting edge 24 is about 1.2 mm, Hₘₐₓ can be as much as about 5 mm. This causes a large point load on the cutting edge 24 and in turn, through the rivets 19, also on the saw chain 10' itself. This can cause the saw chain 10' to break.

Yet another problem relating to saw chains known from the prior art, is their stretching. The saw chain should be tightened from time to time, so that it will remain on top of the guide bar. Although automatic chain tensioners are also known, they have a relatively large effect on the price of the felling head.

The present invention is intended to create a tree-handling device and a multi-process machine, in which the saw chain is utilized and the aforementioned advantages are gained. In addition, the invention is intended to create a method for arranging the cutting operation of a tree-handling device, which improves the durability of the saw chain and reduces the power consumption of the cutting device. The characteristic features of the tree-handling device according to the invention are stated in claim 1, of the multi-process machine in claim 8, and of the method in claim 10.

In the tree-handling device according to the invention, several consecutive tooth links of the saw chain are connected directly to each other by a single drive link on one or more consecutive sections of the saw chain, in a direction of rotation of the saw chain. This improves the durability of the saw chain during timber cutting and thus prevents the breaking of the chain. In addition, this can increase the saw chain's cutting effect. Further, in this way the thickness of the windshield of a multi-process machine can be reduced, which in turn reduces the related investment costs.

Owing to the invention, a tooth link and a drive link are arranged to alternate as links in the saw chain. By implementing the saw chain without widely spacing its tooth links, i.e. more closely than in the prior art and without link intervals free of tooth links, the construction of the outer circumference of the saw chain is made more even. By means of the invention, the tree being cut no longer so easily reaches the base of the cutting teeth of the saw chain, i.e. the level of the outer edge of the side plates, as happens in saw chains known from the prior art implemented with widely-spaced tooth links. This avoids loading peaks acting on the saw chain. In addition, the saw chain stays better in the groove arranged for it in the guide bar (i.e., on "top" of the guide bar) .

Owing to the invention, the saw chain's cutting capacity is almost roughly doubled. As the saw chain's cutting capacity is greater, the speed of the saw chain can, for its part, be reduced. Despite the reduction in chain speed, a cutting speed close to the former one is maintained, but the kinetic energy of the chain drops considerably. The reduction in speed is followed in turn by a saving in the energy consumption and the energy-production requirements of the work machine.

The consecutive tooth links of the saw chain can alternate in cutting direction, i.e. can be in opposite directions. They then cut the tree from alternating opposite sides relative to a plane defined by the guide bar and also to the sawing groove. When the tooth links are more closely spaced in the saw chain, the saw chain can surprisingly be narrowed. This also results in a smaller power requirement in the cutting device and thus a saving in energy. The durability of the guide bar also improves.

In the tree-handling device of a multi-process machine according to the invention the rotation of the guide bar, i.e. the pressing of the guide bar against the tree being cut and the return of it back to the home position by rotation, can be implemented, for example, in such a way as to take into account the current rotational velocity of the saw chain. Other addition advantages of the invention are stated in the description portion and its characteristic features in the accompanying Claims.

The invention, which is not restricted to the embodiments presented in the following, is described in greater detail with reference to the accompanying Figures, in which
- Figure 1: shows schematically one example of a multi-process machine, seen at an angle from in front,
- Figure 2: shows schematically the multi-process machine of Figure 1, seen from above,
- Figure 3: shows schematically an example of one tree-handling device, which includes a cutting device equipped with a saw chain, and which is used in the embodiment of Figures 1 and 2,
- Figure 4a: shows a side view of an example of the saw chain in connection with the guide bar of a tree-handling device according to the invention,
- Figure 4b: shows a side view of the saw chain according to Figure 4a and the tree intended to be cut in connection with the saw chain when starting cutting,
- Figure 5: shows a top view of the saw chain or saw-chain blank of a tree-handling device,
- Figure 6: shows one example of a saw chain according to the prior art when cutting a tree,
- Figure 7: shows schematically the paths of travel in a cutting situation of a saw chain according to the prior art and a saw chain in a tree-handling device according to the invention and
- Figure 8: shows a side view of another example of the saw chain in connection with the guide bar of a tree-handling device according the invention.

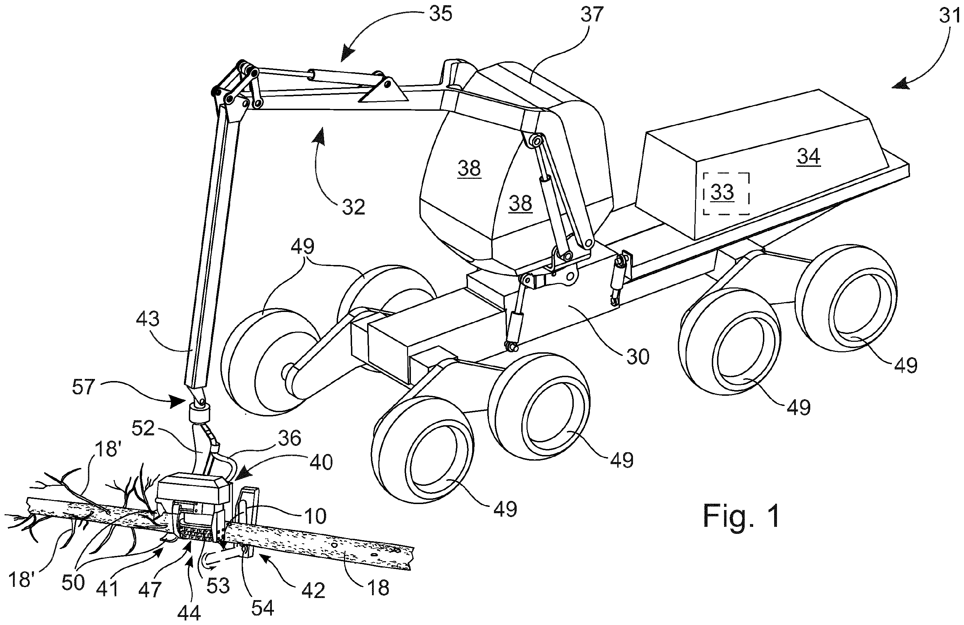

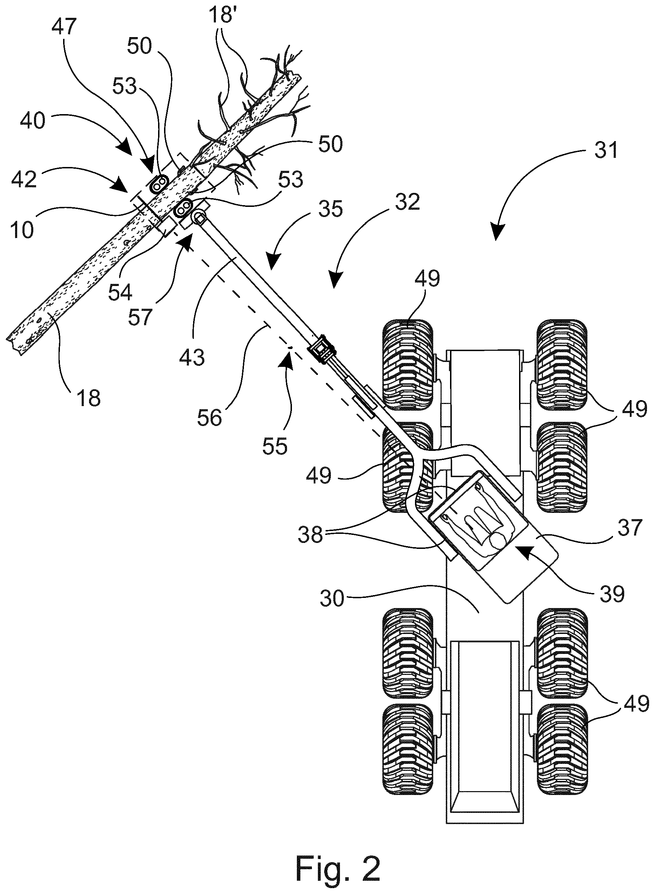

Figure 1 shows schematically one example of a multi-process machine 31 seen at an angle from in front and in Figure 2 from above. In multi-process machines 31, there is usually a crane 32, fitted on a base machine 30, with a moving set of working booms 35, at the end of the last boom of which, i.e. in this case boom 43, a tree-handling device 40 is attached, for example in a pivoted manner. The pivoting of the tree-handling device 40 to the boom 43 can be made, for example, according to the prior art using two transverse rotational pivots in different directions to each other, more generally using a pivoted joint. This can also be referred to as suspension 57.

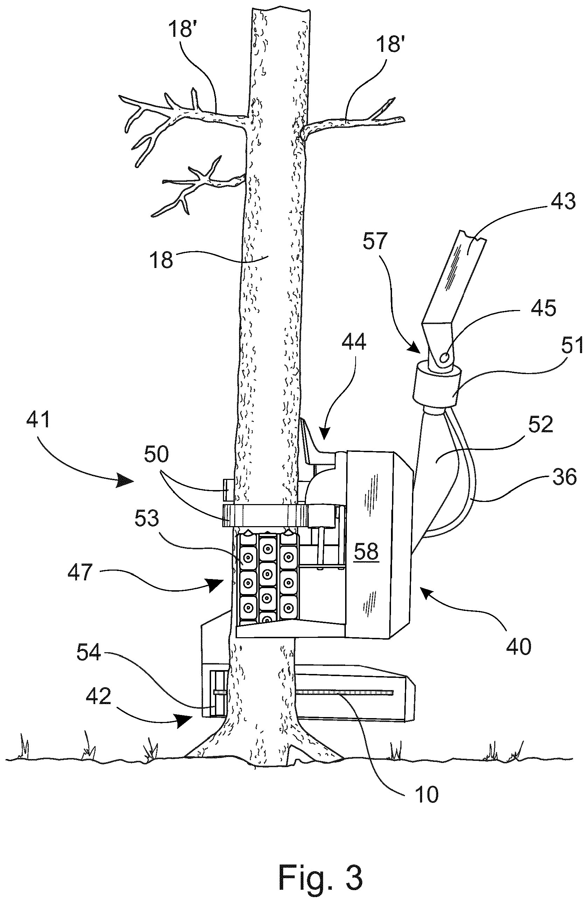

Between the tree-handling device 40 and the pivoted joint there can be a rotation device 51, which is also generally referred to as a rotator. With the aid of the rotation device 51, the tree-handling device 40 can be rotated without limit around the axis of rotation of the rotation device 51. The flow of pressure-medium required by the operating devices (for example, the saw motor 54) of the tree-handling device 40 can be brought through the working booms 35 of the crane 32 with the aid of the hoses 36, more generally, pressure-medium lines from the pressure-medium pump 33 of the base machine 30. In order to create pressure, the pressure-medium pump 33 is run, for example, with the aid of the engine 34 of the base machine 30. The motorized base machine 30 includes a cab 37, which is equipped with a windshield 38. In the cab 37, there is a seat for the driver 39 of the multi-process machine 31, who controls, for example, the crane 32 and the tree-handling device 40, more generally the operation of the multi-process machine 31. When working, the distance of the tree-handling device 40 from the cab 37 and the driver in it can be several metres, even as much as ten metres. Thus the length of the set of working booms 35 is several metres. It is then impossible for the driver 39 to see the sawing line of the object to be cut, which is made still more difficult by the rotating guide bar. The multi-process machine 31 is equipped with, for example, wheels 49 or crawler tracks arranged to circulate around them (not shown) and sufficient ground clearance. By means of the wheels 49 and/or the crawler tracks and the ground clearance, the multi-process machine 31 is able to move off-road. The tree-handling device 40 can be said to include an operating unit 44, in which the basic component is a cutting device 42, a feed device 47, and stripping blades acting as grab claws 50. Their operation is described in greater detail hereinafter with reference to Figure 3.

In connection with Figure 2 has been also illustrated the problem relating to the cutting device 42 located in the tree-handling device 40 and particularly its saw chain 10, which the invention solves. If the saw chain 10 breaks, pieces of chain 55 are thrown from it. If the tree-handling device 40 is in a suitable line relative to the multi-process machine's 31 cab 37, the chain pieces 55 are aimed at the cab 37 and the driver 39 sitting in it. The line of flight of the chain pieces 55 is shown in Figure 2 by the reference number 56. Despite the cab's 37 windshield 38, the chain pieces 56 may penetrate it and thus even cause the death of the driver 39. In addition, the chain pieces 56 also fly into the surroundings of the machine 31, leading to large safety zones around the machine 31.

Figure 3 shows a rough schematic diagram of one example of the tree-handling device 40 used in Figures 1 and 2 seen from the side in the position in which a tree 18 is begun to be felled. In connection with the invention, the tree-handling device 40 can be understood very widely. A very typical series of processing operations, which are performed using the tree-handling device 40, is the standing felling of the tree 18, the stripping of the branches 18', and the cutting of the stripped trunk into parts of regular length as the stripping progresses. Similarly, the processing performed by the tree-handling device 40 can also be the individual operations referred to above or various combinations of them. It can be, for example, stripping of tree trunks, cutting performed in connection with stripping, and/or collection of one or more ready stripped tree trunks, for example, for the stacking or loading of the trees. One or even more trees may be handled at a time, in which case it can be called the bundle handling of trees.

The tree-handling device 40 shown in Figure 3 can also be called a harvester or processor head. In Figure 3, the suspension device 52 and operating unit 44 of the tree-handling device 40 are in the felling position. The tree-handling device 40 includes its rotation apparatus (not shown), a suspension device 52, and an operating unit 44. The tree-handling device 40 is suspended from the boom 43 on the pivot point 45. The boom 43 can be part of the crane 32 of a base machine 30, such as a multi-process machine 31 or a special harvester, or the boom of an excavator or other similar moving base. The control and pressurized oil of the tree-handling device 40 comes from the base machine 30 in the manner already referred to.

To rotate the operating unit 44, the tree-handling device 40 includes an operating device for rotating the operating unit 44 between the felling position and the stripping positions. In Figure 3, the tree-handling device 40 is in the felling position. The operating unit 44 is then mainly vertical. The stripping position is achieved when the operating unit 44 is rotated by the operating device by about 90° from the position shown in Figure 3. As a result of the rotation, the operating unit 44 is mainly horizontal, as shown in Figures 1 and 2. The operating device for rotating the operating unit 44 can be, for example, a hydraulic cylinder located in the casing 58, but it can also be some other operating device suitable for the purpose.

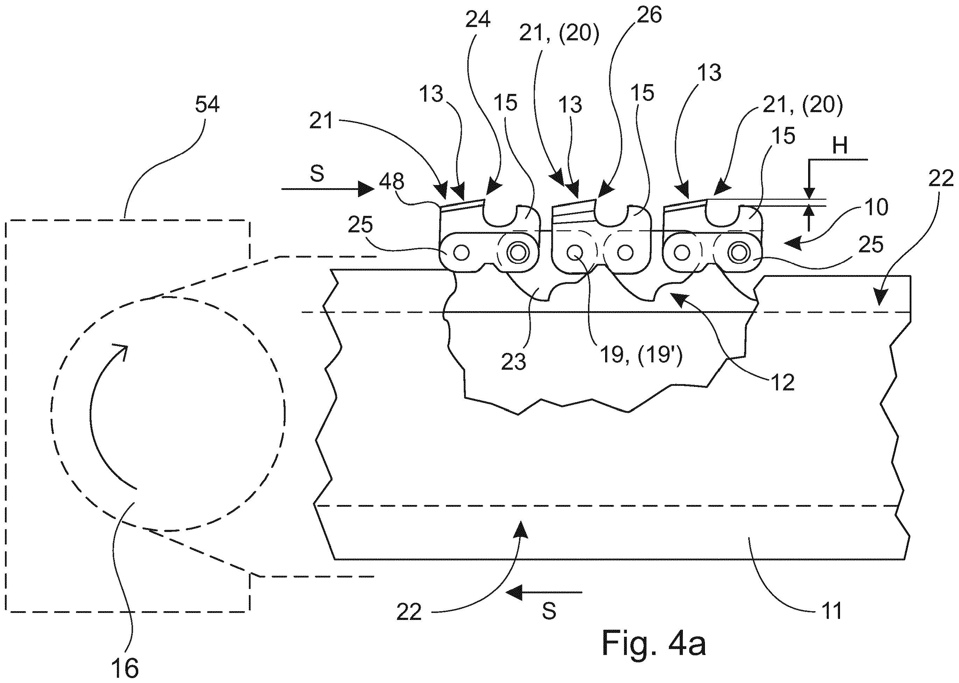

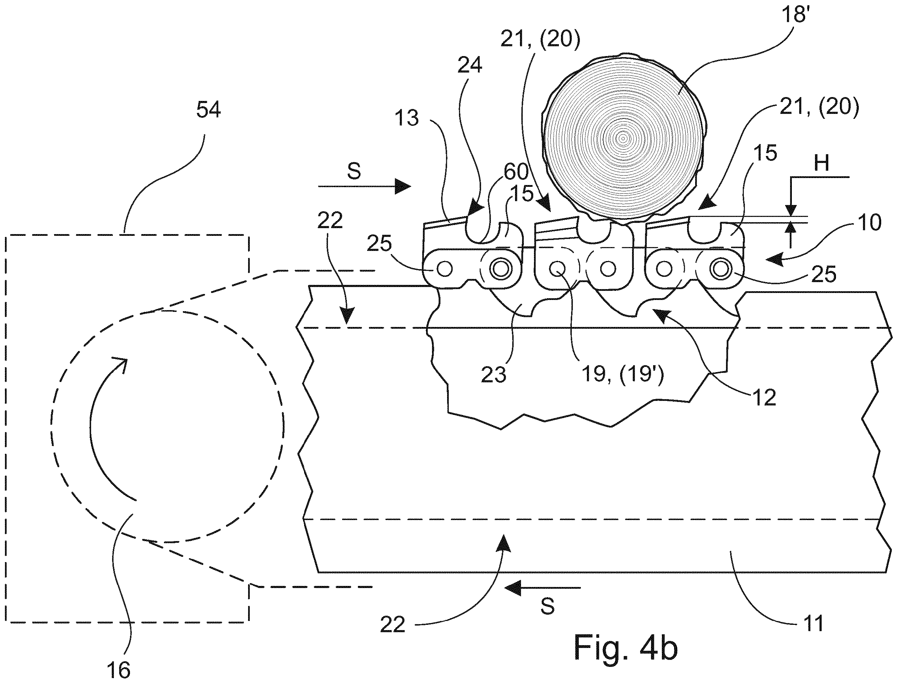

The tree-handling device 40 also includes a cutting device 42. The cutting device 42 is a rotating saw-chain saw. It is located at the end of the tree-handling device 40 and thus also of the operating unit 44. The felling of the tree 18, i.e. felling cutting, can be performed using the cutting device 42 and, in addition, also the cutting of the tree 18 into regular lengths. In addition to the saw chain 10, the cutting device 42 also includes a rotating guide bar 11 (Figures 4a and 4b), a saw-chain's 10 drive wheel 16 (Figures 4a and 4b), by which the saw chain 10 is rotated around the guide bar 11, and guide bar's 11 rotation means for performing sawing. Using the rotation means, the guide bar is pressed, i.e. loaded against the tree 18 being sawed. In addition, the rotation means also return the guide bar 11 with the saw chain 10 back to its home position for the next sawing. Figure 1 shows the extreme positions of the guide bar 11 and an arrow showing the back-and-forwards rotational movement between them of the guide bar 11.

In principle, the tree-handling device 40 operates by gripping the tree 18 with the gripping means 41 of the operating unit 44. An example of the gripping means 41 are the opening and closing grab claws 50. The grab claws 50 can also have a blade function for stripping the tree 18 of branches 18'. The feed device 47 can also act as the gripping means. The feed device 47 can be, for example, rollers, crawler tracks 53, or even a pulsed feed. Instead processing an individual tree 18, the gripping means 41 and/or the feed device 47 can also be used to perform the bundle processing of trees.

Once the standing cutting of the tree 18 has been performed using the cutting device 42, the operating unit 44 is rotated to the horizontal position to strip the tree 18 of branches 18' and cut it into parts of regular length. After that, the tree-handling device 40 is moved relative to the tree 18 by the crawler tracks 53 of the feed device 47. As a result, the tree 18 travels through the operating unit 44. In the case of smaller trees, the tree 18 can move relatively to the stationary operating unit 44. When the grab claws 50 are closed they are tightly against the trunk of the tree 18 and at the same time as the tree 18 moves relative to the operating unit 44 the stripping blades in the edges of the grab claws 50 cut the branches 18' off the tree 18. When a part of the desired length of the tree 18 has been stripped, the trunk is sawn into a regular-length part with saw chain 10 of the cutting device 42. After this, stripping continues by feeding the tree through the grab claws 50.

Figure 4a shows a side view of one example of the saw chain 10 on a guide bar 11. It is also possible to speak of a blade chain, instead of the saw chain 10. Correspondingly, Figure 4b shows a side view of the same saw chain 10 when the saw chain 10 is in contact with the tree 18 to be cut, when cutting begins. The saw chain 10 is thus intended, for example, for the cutting device 42 of the tree-handling device 40 shown in Figure 3. The saw chain 10 includes links 20, which are connected to each other by connector elements 19'. Here the connector elements 19' are rivets 19. In the saw chain 10, the links 20 are connected to each other by rivets 19 in such a way that the saw chain 10 is an endless chain loop, which is to be fitted to rotate in a groove 22 arranged in the outer edge of the guide bar 11. Thus the links 20 are rotatably pivoted to each other through the rivets 19, to permit the forward and backward movement of the saw chain 10 around the elongated guide bar 11. The guide bar 11 is now an elongated blade flange, which can also be called a cutting flange. In an as such known manner the groove 22 is on the outer edge of the guide bar 11, in the upper edge and correspondingly also in the lower edge. The saw chain 10, which is formed as an endless chain loop, can be said to have an inner circumference and an outer circumference. On the side of the inner circumference, the chain loop formed by the saw chain 10 is to be arranged to rotate in the groove 22 arranged in the guide bar 11. Correspondingly, the outer circumference of the saw chain 10 is to be arranged against the tree 18 for its cutting, i.e. sawing. The saw chain's 10 cutting elements are on the outer edge of the saw chain 10.

As links 20, the saw chain 10 includes tooth links 21 and drive links 12. Each tooth link 21 is formed of a cutting tooth 13 protruding sideways from one side of the outer circumference of the saw chain 10, and a side plate 25. The cutting tooth 13 for its part includes a cutting edge 24 arranged on the outer circumference of the saw chain 10, and an optional depth-adjustment tooth 15. In the endless chain loop formed by the saw chain 10 this side is on the side of the outer circumference of the saw chain 10. In the opposite direction relative to the direction of rotation S of the saw chain 10 there is first now in the tooth link 21 an optional adjustment tooth 15, which can also be called a depth or adjustment tooth. It can be a blunt protrusion made in an as such known manner in the cutting tooth 13. The depth-adjustment tooth 15 adjusts, in an as such known manner, the cutting depth H of the cutting edge 24 following the adjustment tooth 15, in the opposite direction to the direction of rotation S of the saw chain 10. The adjustment tooth 15 travels on the surface of the tree 18. It determines how deeply H the cutting edge 24 of the cutting tooth 13 following it bites into the tree 18 being sawn.

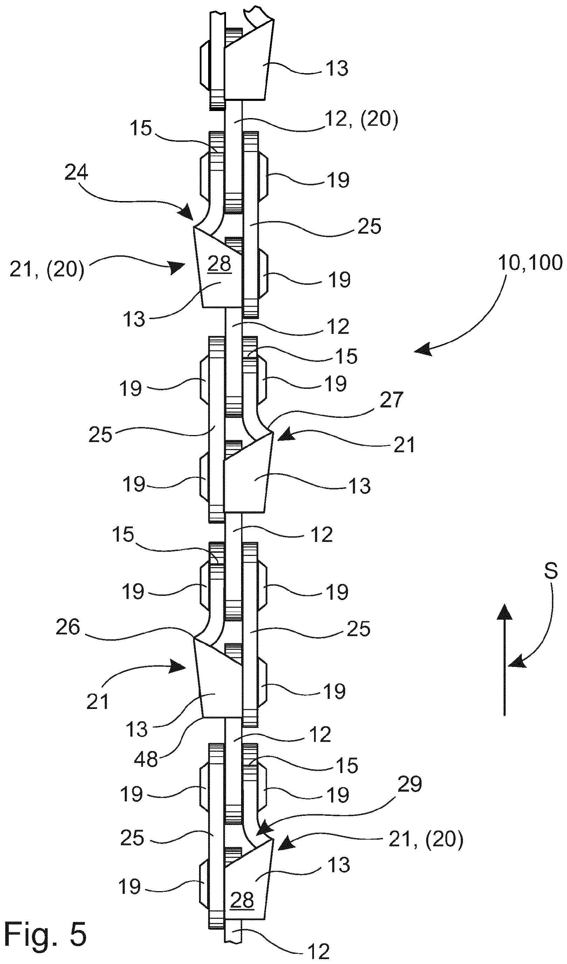

For its part, the cutting edge 24 includes, following an as such known principle, a cutting corner 26 arranged in its upper corner on the side of the depth-adjustment tooth 15, and the side plate 27 of the tooth link 21 (Figure 5). The cutting corner 26 and side plate 27 of the tooth link 21 cut the tree's 18 fibres by cutting the tree 18 by slicing i.e. chipping. In addition, the cutting tooth 13 also includes a smooth shaping, the cutting corner 29 (Figure 5), arranged in its upper plate 28. This guides the chip cut from the tree 18 away from the sawing groove formed in the tree 18 and at the same time also away from contact with the saw chain 10. Thus, the cutting corner 29 lifts the cut wood chips up and out of the sawing gap. There are holes in the cutting tooth 13 and side plate 25 for the rivets 19. By these the tooth link 21, formed by the cutting tooth 13 and side plate 25, is attached to the preceding and following links 20 in the direction of rotation S of the saw chain 10.

The drive links 12 belonging to the links 20 is to be fitted to the opposite side of the saw chain 10 relative to the side of the adjustment tooth 15 and cutting edge 24 of the cutting tooth 13, in the groove 22 in the guide bar 11. It is then also possible to speak of the inner circumference of the saw chain 10. Thus, by using the drive links 12, the saw chain 10 is to be fitted into the groove 22 in the guide bar 11, where it circulates the guide bar 11 in the direction of rotation S. The drive links 12 include drive tongues 23 on one edge, being the opposite side, i.e. the side of the inner circumference, of the saw chain 10 to the cutting edge 24 and optional depth-adjustment tooth 15. The drive tongues 23 fit into the groove 22 in the guide bar 11. In addition, the drive tongues 23 are shaped to also suit the shape of the outer circumference of the drive and sprockets 16, 17. In addition to the drive tongues 23, there are holes in the drive links 12 for rivets 19. The drive link 12 is attached by these to the preceding and following links 20, in the case of the invention, to the tooth links 21. The parts of the tooth link 21, the cutting tooth 13 and side plate 25 of the tooth link 21, lie on each side of the drive link 12 at the rivet holes, to connect the links 20 to each other in a pivoted manner, i.e. rotatably.

In the saw chain 10, the consecutive tooth links 21 are mainly always connected directly together by a single drive link 12. Thus, several tooth links 21 can be said to be fitted consecutively to the saw chain 10. Thus the saw chain 10 has on one or more sections tooth links 21 immediately on both sides of the drive link 12, in the direction of rotation S of the saw chain 10. In the case according to the presented embodiment, every second link 20 of the saw chain 10 is a tooth link 21 and every other a drive link 12. Thus in the saw chain 10, a tooth link 21 and a drive link 12 are arranged to alternate as links 20 over the entire length of the saw chain 10 and thus also over the entire chain loop. Thus, the number of tooth links 21 in the saw chain 10 is double that in a saw chain 10' according to the prior art.

It can be seen from Figure 4b that, when starting cutting, the use of such a link arrangement significantly limits the entry of the tree 18 intended to be cut by sawing to the base 60 of the saw chain 10, i.e. to the level of the outer edge of the lower side plates 25, as happens in the case of the intermediate links 14 formed from only side plates 25 (Figure 6). Thus, this avoids the biting of the cutting tooth 13 too deeply, which stresses the saw chain 10 and is typically precisely what breaks the saw chain 10. In other words, by removing the intervals free of tooth links, i.e. the intermediate links 14 formed only from side plates 25, the travel of the tree 18 against the saw chain 10 is evened. Thus the tree 18 travels in a straighter line, i.e. more evenly against the outer circumference of the chain loop formed by the saw chain 10. Thus, owing to the invention, the saw chain 10 has no links at all formed from only side plates 25. This avoids chipping of the tree 18 that takes place too deeply on the cutting edge 24 of the cutting tooth 13. In this way, the cutting tooth 13 cannot have an excessive cutting depth Hₘₐₓ.

On account of this, large point loads are not directed to the saw chain 10, and it is not so liable to break. Correspondingly, the saw chain 10 places smaller surface pressures on the guide bar 11.

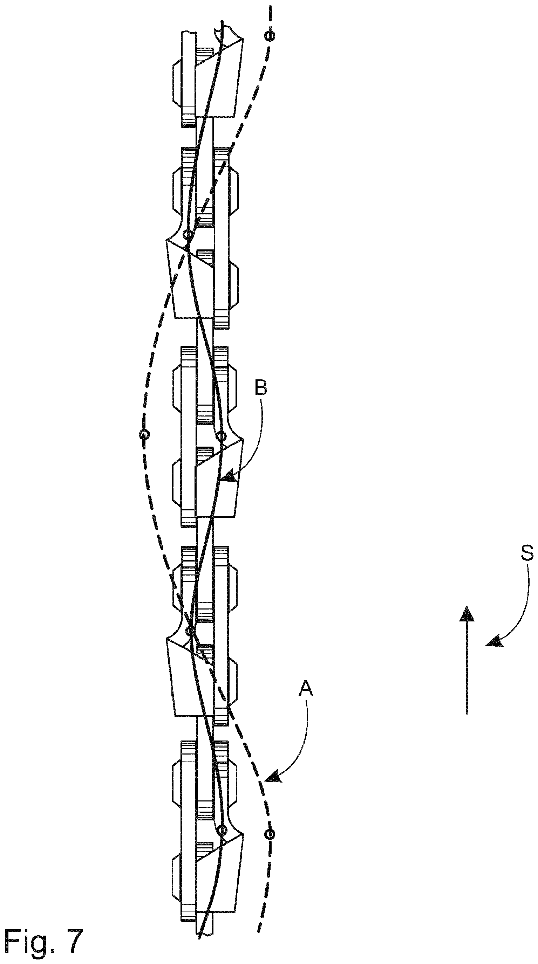

In consecutive tooth links 21, the cutting teeth 13 are arranged to cut on opposite sides to each other, i.e. to be in opposite directions. A cutting teeth 13 can then be said to be alternately right-handed and left-handed. Further in other words, the consecutive cutting teeth 13 of the saw chain 10 are arranged to alternate to the right and left sides relative to the plane defined by the guide bar 11. First of all this ensures that the sawing groove formed by the saw chain 10 in the tree 18 becomes straight. In addition to this, it has been observed surprisingly in pilot-stage tests, that in this way, as also more generally by arranging cutting teeth 13 in each link, the avoidance due to the sawing force appearing in the sawing situation in the saw chain 10 is also reduced. Figure 7 shows schematically an example of this. The path of travel in the sawing situation of a saw chain 10' according to the prior art is shown with a broken line and the reference A and the path of travel in a sawing situation of a saw chain 10 according to the invention is shown with a solid line and the reference B. The avoidance appears precisely, for example, in saw chains 10' known from the prior art, in which there are one, two, or even more intermediate links 14 formed from only side plates 25 consecutively between the tooth links 21 (Figure 6) before the next tooth link 21.

Owing to the invention, when link intervals empty of tooth links have been even entirely removed from the saw chain 10, the saw chain 10 can avoid less in the sawing groove the tree 18 being cut, as seen in Figure 7. In other words, due to the increased tooth link density of the saw chain 10, the tooth links 21 of the saw chain 10 no longer have the possibility to avoid the wood, because in the sawing situation the saw chain 10 is effectively stiffer. Because the tooth links 21 follow each other more densely in the saw chain 10 than in known chains, when the consecutive tooth links 21 are in the sawing groove they oppose this avoidance more effectively. The tooth links 21 are then forced to bite into the wood 18 more effectively and thus sawing too takes place more effectively. This is, in turn, followed by the property that the sawing groove, which the saw chain bites when cutting the tree 18, becomes wider than with known saw chains 10' with link intervals free of tooth links, in which the saw chain 10', brought to a head can wind, twist, and rotate in the groove 22 in the guide bar 11, travelling from side to side between the consecutive tooth links 21. A narrower sawing groove results from this avoidance in the sawing groove due to the winding of the saw chain 10'.

In the applicant's pilot-stage tests, measurements have been made of the dynamic widths of various saw chains. Here the term dynamic width of the saw chain refers to the width of the sawing groove made by the saw chain. Due to the cutting forces, the cutting teeth of the saw chain then seek to avoid the wood in the sawing groove and the width of the sawing groove is not the same as the theoretical width of the saw chain. Using a saw chain 10' known from the prior art a dynamic width of 8.4 + 0.2 mm was obtained with a new saw chain and correspondingly 7.9 + 0.2 mm with a slightly-used saw chain. The tendency of the cutting teeth 13 of the saw chain 10' to avoid the wood 18 being cut was noted to be the greater, the blunter the cutting tooth 13 of the tooth link 21. For its part, using a saw chain 10 of a tree-handling device 40 according to the invention the dynamic width of the saw chain 10 was as much as 9.2 + 0.2 mm. The intermediate links 14 formed of only side plates 25 in the saw chain 10' known from the prior art permitted a greater deformation in the saw chain 10'. This results, in known saw chains 10', in the cutting teeth 13 seeking to avoid the wood in the sawing groove and thus the sawing groove becoming narrower. In the measurements, the width of the guide bar 11 was 6.3 mm.

The theoretical sawing groove of the saw chains 10', 10 is 10 + 0.2 mm. On the basis of the mechanical measurements made by the applicant for the saw chains 10, 10', the saw chain 10, 10' narrows in sawing due to its avoidance property enabled by pivots by about 0.4 mm for every rivet 19 i.e. pivot. Thus the saw chain 10 according to the invention narrows about 0.8 mm between consecutive cutting teeth 13. For its part, a saw chain 10' known from the prior art narrows correspondingly about 1.6 mm due to the four rivets 19, i.e. pivots, between the consecutive cutting teeth 13. It can be said that the tolerance of the connector elements 19' of the saw chain 10 has been arranged to limit the lateral displacement of the tooth links 21. The tolerance of the rivets 19 can be, for example, 0 - 0.1 mm. In addition, it was noted that, if the cutting teeth 13 bite too much, the sawing groove can also widen by a corresponding amount for each pivot, so that the saw chain makes the sawing groove too wide.

The invention also increases the service life of the guide bar 11 and reduces its need for maintenance. As, owing to the invention, the cutting teeth 13 cannot in the sawing groove avoid the wood 18 being sawn so much during sawing, the saw chain 10 cannot twist, i.e. tilt, as greatly as in the case of a saw chain 10' according to the prior art. Thus also the travel of the saw chain 10 in the guide bar 11 is straighter. Thus, the support of the saw chain 10 takes place, instead of in the groove 22 of the guide bar 11, in the sawing groove using the cutting teeth 13 of the saw chain 10, particularly their sides, against the wood being sawn. Thanks to the densely arranged cutting teeth 13 of the saw chain 10, the support of the saw chain 10 comes more from the consecutive cutting teeth 13 supported in the sawing grove than from the groove 22 in the guide bar 11. In turn, this results in the guide bar 11 and especially the groove 22 in it not wearing as much as happens with saw chains 10' according to the prior art, in which the saw chain 10' is able to twist and rotate in the groove 22 of the guide bar 11. Owing to the saw chain 10 the guide bar 11 of the tree-handling device 40 according to the invention has in this case a longer life. In addition, as a result of the reduced twisting and rotation the saw chain 10 according to the invention also remains better in place on top of the guide bar 11.

The enlarged sawing groove resulting from the saw chain 10 of a tree-handling device 40 according to the invention permits the narrowing of the physical construction of the saw chain 10. According to one embodiment, the width of the saw chain 10 can be, for example, 10 - 40 %, preferably 15 - 30 % greater than the width of the guide bar 11. Here the width of the saw chain 10 can refer to the distance between the cutting corners 26 of the cutting teeth 13 cutting on opposite sides. The saw chain 10 can be implemented narrowed by, for example, parts of 1.6 mm saw chain. The construction, which is narrower relative to known saw chains, in turn means that the power required to drive the saw chain 10 (to rotate it around the guide bar 11) can be reduced.

The applicant has observed in pilot-stage tests that only in the middle stage of sawing large trees with a diameter of more than 30 cm, i.e. in the case of the sawing point of the greatest diameter, the sawdust leaving the sawing groove may block the saw chain 10. At this point this limits the cutting speed. But as sawing progresses from this, and the diameter of the sawing point again diminishes, i.e. in the final stage of cutting, the cutting speed again increases. Thus, the tree 18 is not able to split.

Z The invention relates to a tree-handling device 40, of which an example is shown above in Figure 3. The tree-handling device 40 includes gripping means 41 for gripping the tree 18 for cutting, and a cutting device 42. The cutting device 42 includes a guide bar 11 equipped with a groove 22. A saw chain 10 is arranged to rotate in the groove 22 in order to cut the tree 18. In addition, the guide bar 11 is arranged to rotate to perform sawing.

The cutting device 42 also includes a drive wheel 16 (Figures 4a and 4b). The drive wheel 16 is typically at the end of the guide bar 11, from where the guide bar 11 rotates when cutting the tree 18. The saw chain 10 is arranged to run via the drive wheel 16 in order to circulate that around the guide bar 11. The inside of the endless chain loop formed by the saw chain 10 is arranged to fit the outer circumference of the drive wheel 16 to transmit power from the drive wheel 16 to the saw chain 10. For this purpose, there is shaping in the drive wheel 16 that is compatible with the drive tongues 23 of the drive links 12 of the saw chain 10. The drive wheel 16 has a drive device, a saw motor 54, which can be hydraulically operated. It is controlled by valves and their control means.

The cutting device 42 also includes a guide bar 11 rotation device (not shown). The guide bar 11 with its drive wheel 16 is fitted at one end rotatably to the cutting device 42 in order to perform cutting of the tree 18 using the saw chain 10. The rotation means can be, for example, a hydraulic cylinder fitted between the guide bar 11 and the structures of the tree-handling device 40. The hydraulic cylinder has a pressing movement and a lifting movement. With the pressing movement, the guide bar 11 and the saw chain 10 rotating around it, more generally the cutting saw, is pressed from the guide bar's 11 home position against the tree 18. Correspondingly, with the lifting movement, the guide bar 11 with its saw chain 10 turns in the opposite direction compared to the pressing movement. In this way the cutting saw is rotated, i.e. returned to the home position arranged for it in the cutting device 42, ready for the next cutting.

The control of the cutting device 42 can be implemented using the method according to Finnish patent number 123055. At present, the control operating in the simplest way is based on a throttle installed in the return line of the motor 54 of the drive wheel 16. When the drive wheel's 16 motor 54 is running, pressure, which affects the feed, is obtained with the aid of the throttle for the hydraulic cylinder (rotation device) intended for the feed, i.e. the rotation of the guide bar 11. The greater the speed of the drive wheel's 16 motor 54, the greater is the feed pressure affecting the rotation of the guide bar 11, i.e. the loading of the guide bar 11 against the tree 18. When the drive wheel's 16 motor 54 stops, the pressure effect ends. The same control curve can naturally be implemented electronically and using software. The flow data is then collected using a suitable sensor. Using the sensor's data, the software means in turn regulate the pressure of the guide bar's 11 pressing cylinder.

The saw chain 10 arranged on the guide bar 11 of the cutting device 42 of the tree-handling device 40 includes links 20 connected to each other by connector elements 19', so that the saw chain 10 is an endless chain loop. As links 20, the saw chain 10 includes tooth links 21 and drive links 12. Each tooth link 21 includes a cutting tooth 13 protruding sideways on one side of the outer circumference of the saw chain 10. In the cutting tooth 13 there is a cutting edge 24 arranged on one side of the saw chain 10, particularly on its outer circumference, and an optional depth-adjustment tooth 15. The drive links 12 are fitted into the groove 22 in the guide bar 11 on the opposite side of the saw chain 10, i.e. on the inner circumference of the saw chain 10. The consecutive tooth links 21 in the saw chain 10 of the cutting device 42 of the tree-handling device 40 are mainly always joined directly to each other by a single drive link 12, as has been described above in connection with the description of the saw chain 10 itself.

In measurements of the saw chain 10 carried out in pilot-stage tests it has been shown that the weight of the saw chain 10 according to the invention increases by about 10 %. Now, when the saw chain's 10 cutting capacity is about 100 % greater with small trees and also in the final stage of cutting large trees, the speed of the saw chain 10 can be reduced. A reduction of speed by, for example, one half permits a cutting speed near to the previous one, but the kinetic energy of the saw chain 10 drops by about 70 %. If the speed is reduced by only 30 % of the original speed of the saw chain, in the case of a saw chain 10 according to the invention kinetic energy is created that is only about 60 % relative to a known saw chain 10'.

Because the saw chain 10 saws more efficiently at a lower speed, with the toothing according to the invention a greater tensile stress is imposed on the saw chain 10. As an example, sawing at a speed of 30 m/s requires a power of about 30 kW, i.e. a tensile force of 1000 N acts of the saw chain. This is only about 10 % of the ultimate load of the saw chain, so this force is not decisive. The saw chain 10 according to the invention for its part also permits a lightening of the equipment of a multi-process machine. As a principle example can be mention a situation, in which a 70-kW motor can be replaced with a smaller and lighter 40-kW motor. In addition to the smaller engine, the lightening benefit is also accumulated, for example, in the size of the pressure-medium lines and control blocks required.

The speed of the saw chain when cutting a tree 18 is arranged to be 20 - 35 m/s, 20 - 33 m/s, 20 - 30 m/s, or even more preferably 25 - 33 m/s. 30 m/s can be given as a specific example of the speed. In solutions according to the prior art, the speed of the saw chain 10' can be 40 m/s. Due to the lower speed of the saw chain 10 relative to the prior art, lubricating medium also stays better in the saw chain 10. The lubrication of the sprocket 17 also improves as its speed is lower. All of this increases the life of the guide bar 11, the sprocket 17, and the saw chain 10. In addition, at a lower speed larger saw motors with a higher torque can be used to drive the saw chain 10 according to the invention, compared to saw chains 10' known from the prior art. When the chain speed is reduced, the creation of dangerous chain-bullets also diminishes considerably and the safety of sawing improves.

Low-revolution saw motors are more durable and other versions too can be use as motors. 14-cc (cm³/r) motors were used in the pilot-stage tests, but even greater efficiency can be achieved with a 19-cc (cm³/r) motor. According to one embodiment, the length of the guide bar 11 can be, for example, 30 - 100 cm. According to one embodiment, the power of the hydraulic saw motor 54 can be, for example, 20 - 100 kW. The power range can be divided into groups. The length of the guide bar 11 correlates with the power ranges formed in groups in a set manner. Surplus power can be, for example, 50 %, if more rapid cutting is required.

One further aspect is also related to an elongated saw-chain blank 100, from which a saw chain 10 is arranged to be formed for the cutting device 42 of the tree-handling device 40. The saw-chain blank 100 can be shown by Figure 5, which shows a top view of it. The saw-chain blank 100 includes links 20 connected to each other by connector elements 19'. As links 20, the saw-chain blank 100 includes drive links 12 and tooth links 21. Each tooth link 21 includes a cutting tooth 13, protruding sideways to the side of the outer circumference of the saw chain blank 100. In the cutting tooth 13, an optional depth-adjustment tooth 15, and a cutting edge 24 are arranged on one side, particularly on the outer circumference, of the saw-chain blank 100. From the saw-chain blank 100 a saw chain 10 can be formed, which is an endless chain loop that can be used in the cutting device 42 of the tree-handling device 40. The saw chain 10 is to be arranged to rotate by its drive links 12 in the groove 22 arranged in the guide bar 11 of the cutting device 42 on the inner circumference of the saw chain 10 formed from the saw-chain blank 100. The consecutive tooth links 21 in the saw-chain blank 100 are, in the manner described above, mainly always connected directly to each other by a single drive link 12.

The saw chain 10 is formed from the saw-chain blank 100 by cutting a suitably length saw-chain portion from it for taking into account the length of the guide bar 11, in which the tooth links 21 of the opposite ends cut on opposite sides to each other. The opposite ends of the saw-chain blank 100 are then joined together using a connector element 19', in such a way that one drive link 12 comes between the consecutive tooth links 21 at the ends to be joined together. Thus an endless chain loop forming an installation-ready saw chain 10 is obtained, which can be installed in the groove 22 arranged for it around the guide bar 11 of the cutting device 42, travelling via the drive wheel 16 belonging to the cutting device 42.

The invention also further concerns a method for arranging the cutting operation of a tree-handling device 40. In the method, the tree 18 is gripped before cutting it. Gripping can be performed using the gripping means 41 of the tree-handling device 40, such as, for example grab claws 50. After gripping, the tree 18 is cut by sawing with the saw chain 10. During sawing, the saw chain 10 is circulated by the drive wheel 16 in the groove 22 arranged in the guide bar 11 of the cutting device 42. The saw chain 10 includes links 20 joined to each other by connector elements 19', so that the saw chain 10 is an endless chain loop. As links 20, the saw chain 10 includes tooth links 21 and drive links 12. The tree 18 is cut by sawing, using the tooth links 21. The fibres of the tree 18 are then cut by the tooth links 21. Each tooth link 21 includes a cutting tooth 13 protruding sideways from one side of the outer circumference of the saw chain 10. In the cutting tooth 13, there is an optional depth-adjustment tooth 15 and a cutting edge 24 on one side, particularly on the outer circumference, of the saw chain 10. The saw chain's 10 drive links 12 are on the opposite side of the saw chain 10, relative to the cutting edge 24 and an optional depth-adjustment tooth 15, in the groove 22 of the guide bar 11. Thus the drive links 12 are then on the inner circumference of the saw chain 10. In addition, the drive links 12 run via the drive wheel 16 belonging to the cutting device 42.

In the method, the travel of the saw chain 10 in the saw groove formed by the saw chain 10 to the tree 18 is evened by the consecutive tooth links 21, which are connected directly to each other by a single drive link 12. In other words, the travel of the saw chain 10 is then evened by two or more tooth links 21 arranged consecutively in the saw chain 10. In addition, in the method the saw chain 10 is also rotated during cutting at a speed of 20 - 35 m/s, or even more preferably 25 - 33 m/s. These advantages have been already stated above in the application's description.

According to yet another embodiment, in the method, during the cutting of the tree 18, the saw chain 10 is rotated around the guide bar 11 by a drive device (drive wheel 16, hydraulic motor 54) and the guide bar 11 is rotated by an operating device against the tree 18 being cut. The rotation of the guide bar 11 takes place relative to a pivot point arranged in one end of it. The rotation of the guide bar 11 against the tree 18 being cut is controlled on the basis of the speed of the saw chain 10 or a comparable variable. As stated above, the speed of the saw chain 10 according to the invention can vary in different stages of the cutting. At the start and end of the cutting, the saw chain's 10 speed can be higher, and be lower in the middle of the cutting, when the diameter of the object being cut is greatest. By adjusting the loading of the guide bar 11 against the tree 18 on the basis of this speed data, the speed of the saw chain 10 can be affected and thus sawing accelerated. When the saw chain's 10 speed drops, the loading of the guide bar 11 can be correspondingly reduced. When the saw chain's 10 speed is high, the loading of the guide bar 11 can also be kept high.

The saw chain 10 of a tree-handling device 40 according to the invention is also suitable for cutting very small trees. In a conventional saw chain 10' the cutting-tooth interval is about 40 mm, whereas in the saw chain 10 according to the invention it is about 20 mm. At the start of sawing the small branches have less chance of striking the body part of the saw chain 10, i.e. the level of the edge of intermediate links 14 formed of only side plates 25, as these are not in the saw chain 10. Such a situation very typically occurs during felling cutting. Though the tree to be felled might be large, there are often branches in its butt area and before the saw chain 10 starts moving a branch or twig can come at an intermediate link in a known saw chain 10' where there is no cutting tooth 13. Due to the great length of the working boom, the driver cannot see precisely the point in the tree where cutting will take place.

The invention is suitable, for example, for saw chains 10, whose pitch is 10 - 20 mm (Figure 6). For example, in the saw chains 10', 10 of Figures 6 and 4a the pitch is about 10 mm. The width of the saw chain 10 can be, for example, 7 + 0.2 mm at the rivets 19 and 5.5 + 0.2 mm at the cutting tooth 13 and the side plate 25. The cutting tooth 13 too, especially its upper plate 28, can be narrowed. The cutting tooth 13 can be narrowed starting from its cutting corner 26 to the rear edge 48 of the trailing edge of the upper plate 28. This narrows the width of the saw chain 10 compared to a known chain.

The bite of the cutting tooth 13 can also be reduced. The bite can be reduced compared to saw chains 10' according to the prior art, in which the angle between the surface of the upper plate 28 of the cutting tooth 13 and the horizontal plane is, for example, about 9 degrees. In the saw chain 10 of a tree-handling device 40 according to the invention, this angle can be surprisingly substantially smaller than in the known chain. An example of this angle is 0.5 - 7 degrees, 0.5 - 6 degrees, particularly 0.7 - 6 degrees, 0.7 - 5 degrees, and further, as various specific examples, 7 degrees, 6 degrees, 5 degrees, 4 degrees, 3 degrees, 2 degrees, 1 degree, preferably 1 - 5 degrees. The small bite angle gives plenty of space for the chips created during sawing, which becomes less thick than in the prior art, due to the smaller bite angle.

In Figures 4a, 4b, and 5, a small gap can be seen between the consecutive links 20. However, the consecutive tooth links 21 can even touch each other, when the saw chain 10 is examined over its straight run. The depth-adjustment tooth 15 of the next link 20 performing the depth adjustment in the consecutive links 20 is then situated at the rear edge 48 of the cutting tooth 13 of the previous link 20. In addition, the height of the depth-adjustment tooth 15 of the next tooth link 21 in the direction of travel of the saw chain 10 may be arranged to be at the height of the rear edge 48 of the cutting tooth 13 of the tooth link 21 preceding it at least in part of the tooth links 21. Thus nothing fits in front of the tooth link 21. The only point in the saw chain 10 deviating essentially from a mainly straight line is between the depth-adjustment tooth 15 and the cutting edge 24 of the cutting tooth 13. Thus even small twigs cannot go between the links 20 to cause sharp impacts weakening the construction of the saw chain 10. The durability of the saw chain 10 thus improves and thus the thickness of the windshield 38 of the multi-process machine 31 can be, for example, only 5 - 15 mm, because the risk of the saw chain 10 breaking is reduced.

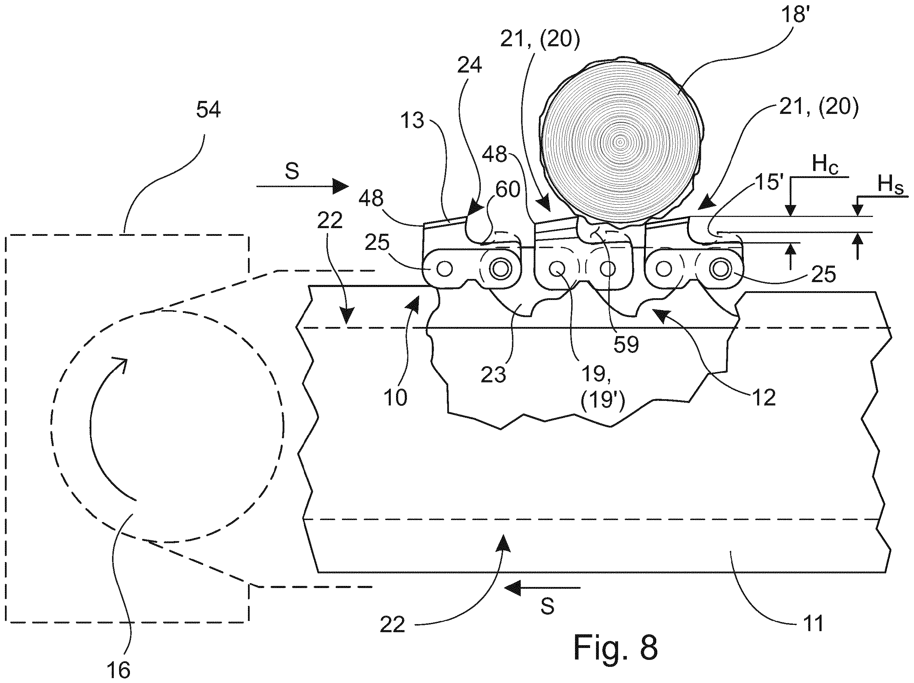

Figure 8 shows yet another example of the saw chain 10. It demonstrates that the tooth links 21 can even lack the depth-adjustment tooth 15, which is included in the examples described above. In other words, in this example the depth Hₛ of the space 59 between the consecutive cutting teeth 13 can correspond mainly to the height H_{c} of the cutting tooth 13 over the whole space from the rear edge 48 of the preceding cutting tooth 13 to the cutting edge 24 of the following cutting tooth 13.

On the other hand, the space 59 between the consecutive cutting teeth 13 can be at least half free of structures in the direction of the height H_{c} of the cutting tooth 13. In that case, the height of the depth-adjustment tooth 15, or the corresponding formation 15' at the same location, is less than 50 % of the height H_{c} of the cutting tooth 13. Preferably the height of the depth-adjustment tooth 15 or the formation 15', which is, for example, at a corresponding location to it, is less than 20 % of the height H_{c} of the cutting tooth 13, but, however, under 60 % of the height H_{c} of the cutting tooth 13. In other words, for example the height of the depth-adjustment tooth 15 can be 1 - 60 % of the height H_{c} of the cutting tooth 13. Owing to this, the height Hₛ of the space 59 (determined by the outer edge of the formation 15') between the consecutive cutting teeth 13 is more than 40 % of the height H_{c} of the cutting tooth 13. Here, the height H_{c} of the cutting tooth 13 is the distance from the base of the saw chain 10, i.e. from the base 60 of the cutting tooth 13 to the cutting edge 24 of the cutting tooth 13. The base 60 of the cutting tooth 13 corresponds mainly to the outer edge of the side plate 25. Correspondingly, the depth Hₛ of the space 59 is the (vertical) distance from the upper edge of the formation 15' to the cutting edge 24 of the cutting tooth 13.

Thanks to the consecutive cutting teeth 13, i.e. without intermediate links 14 in the saw chain 14, the cutting depth H of the cutting teeth 13 can be maintained by the cutting teeth 13 themselves. The reduced bite angle also assists in this, Hₘₐₓ being smaller due to it. This simplifies the construction of the saw chain 10 and also facilitates its maintenance (for example, there is no need to adjust the height of the depth-adjustment tooth).

In pilot-stage tests of the saw chain 10 of a tree-handling device 40 according to the invention, the significant advantage has also be observed that the need for post-tensioning the saw chain 10 is clearly less than that of a saw chain 10' known from the prior art. Thus cleaning can be performed with the same saw chain 10 for even a whole day, without post-tensioning of the saw chain 10. This is a result of the lower stress, of the even loading, of the more even running in the guide bar, and also of the reduced vibration, which is a problem in known saw chains 10', in the saw chain 10 of a tree-handling device 40 according to the invention. Due to this, the saw chain 10 works well even in felling heads without an automatic chain tensioner. In these felling heads, the chain tensioner accounts for a relatively significant portion, of even thousands of Euros, of the total price of the felling head, so that savings are gained when investing in a felling head.

In addition, it has also been observed in pilot-stage tests that the saw cut of the saw chain 10 has a considerably smoother surface compared to the known technique. This positively affects, for example, colour markings made on sawn surfaces. Due to the surface smoothness they also adhere better to the wood and are clearer, making them also highly visible.

Above, the effect of the chain-bullet phenomenon was dealt with from the driver's point of view. The same phenomenon also endangers people in the vicinity. The hazard area around the work machine can be reduced by using the invention.

The invention has been tried in harvesters manufactured bv Kone Ketonen Oy. The chains were manufactured from "STIHL^{®} motoketju" chains (groove widths 1.6 mm and 2.0 mm) marketed by Uittokalusto Oy (FI). The STIHL^{®} chains were disassembled into components and reassembled again without the intermediate links between the tooth links 21.

It should be understood that the above description and the related figures are intended only to illustrate the device and method according to the present invention. The invention is thus not restricted to the embodiments described above or defined in the claims, but instead many different variations and adaptations of the invention, which are possible within the scope of the accompanying claims, will be obvious to one skilled in the art.

## Claims

1. A tree-handling device, which includes
- gripping means (41) for gripping a tree (18) in order to cut it,
- a cutting device (42), which includes a rotatable guide bar (11) equipped with a groove (22), in which the saw chain (10) is arranged to circulate in order to cut the tree (18),
and which saw chain (10) includes
- links (20) connected to each other by connector elements (19'), in such a way that the saw chain (10) is an endless chain loop,
- as links (20), tooth links (21), each of which includes a cutting tooth (13) protruding sideways on the outer circumference of the saw chain (10), and drive links (12), which are arranged in the groove (22) of the guide bar (11) on the inner circumference of the saw chain (10),
**characterized in that**,
- in the saw chain (10), several consecutive tooth links (21) are connected directly to each other by a single drive link (12) on one or more consecutive sections of the saw chain (10), in a direction of rotation (S) of the saw chain (10),
- the circulation speed of the saw chain (10) when cutting the tree (18) is arranged to be 20 - 35 m/s, preferably 25 - 33 m/s.

2. The tree-handling device according to Claim 1, **characterized in that** the width of the saw chain (10) is 10-40 %, preferably 15 - 30 % greater than the width of the guide bar (11).

3. The tree-handling device according to Claim 1 or 2, **characterized in that** the bite angle of the cutting tooth (13) is 0.5 - 7 degrees, preferably 0.5 - 6 degrees, most preferably 0.5 - 5 degrees.

4. The tree-handling device according to any of Claims 1 - 3, **characterized in that**, the tolerance of the connector elements (19') of the saw chain (10) is arranged to restrict the lateral displacement of the tooth links (21).

5. The tree-handling device according to any of Claims 1 - 4, **characterized in that** the tooth links (21) include a depth-adjustment tooth (15) and in the consecutive tooth links (21) the depth-adjustment tooth (15) of the following tooth link (21) is arranged at the location of the rear edge (48) of the cutting tooth (13) of the preceding tooth link (20).

6. The tree-handling device according to any of Claims 1 - 5, **characterized in that** the tooth links (21) include a depth-adjustment tooth (15) and the height of the depth-adjustment tooth (15) is 1 - 60 % of the height (H_{c}) of the cutting edge (24) of the cutting tooth (13) from the base (60) of the cutting tooth (13).

7. The tree-handling device according to any of Claims 1 - 6, in which the saw chain (10) is arranged to be circulated around the guide bar (11) by a drive device (16, 54) and the guide bar (11) is arranged to be rotated against the tree (18) being cut, **characterized in that** the rotation of the guide bar (11) against the tree (18) being cut is arranged to be controlled on the basis of the speed of the saw chain (10) or a variable proportional to it.

8. A multi-process machine, which includes
- a motorized base machine (30),
- a cab (37) fitted to the base machine (30),
- a crane (32), equipped with a set of working booms (35), fitted to the base machine (30),
- a tree-handling device (40), fitted to the end of the set of working booms (35), which includes
- gripping means (41) for gripping the tree (18) in order to cut it,
- a cutting device (42), which includes a rotatable guide bar (11) equipped with a groove (22), in which a saw chain (10) is arranged to circulate in order to cut the tree (18),
**characterized in that** the tree-handling device (40) is according to any of Claims 1 - 7.

9. The multi-process machine according to Claim 8, **characterized in that** the multi-process machine (31) is equipped with a cab (37), in which there is a windshield (38), which is 5 - 15 mm thick.

10. A method for arranging a cutting operation of a tree-handling device, in which
- a tree (18) is gripped by the tree-handling device (40) prior to its being cut,
- the tree (18) is cut with a saw chain (10), which is circulated in a groove (22) arranged in a rotatable guide bar (11) and in which cutting a saw groove is formed in the tree (18), and which saws chain (10) includes
- links (20) connected to each other by connector elements (19'), in such a way that the saw chain (10) is an endless chain loop, which circulates in the groove (22) arranged in the rotatable guide bar (11),
- as the links (20), tooth links (21), each of which includes a cutting tooth (13) protruding sideways from one side of the outer circumference of the saw chain (10), and drive links (12), which are in the groove (22) of the guide bar (11), on the inner circumference of the saw chain (10),
**characterized in that**
- the travel of the saw chain (10) in the saw groove being formed in the tree (18) by the saw chain (10) is evened by the consecutive tooth links (21) of the saw chain (10), which are connected directly to each other by a single drive link (12),
- in cutting, the saw chain (10) is circulated at a speed of 20 - 35 m/s, preferably 25 - 33 m/s.

11. The method according to Claim 10, in which in addition in connection with cutting
- the saw chain (10) is circulated around the guide bar (11) by a drive device (16, 54),
- the guide bar (11) is rotated against the tree (18) being cut,
**characterized in that** the rotation of the guide bar (11) against the tree (18) being cut is controlled on the basis of the speed of the saw chain (10) or a variable proportional to it.

## Patentansprüche

1. Baumbeearbeitungsvorrichtung, die Folgendes umfasst
- Greifmittel (41) zum Greifen eines Baumes (18), um ihn zu schneiden,
- eine Schneidvorrichtung (42), die eine drehbare Führungsschiene (11) umfasst, die mit einer Nut (22) versehen ist, in der die Sägekette (10) umlaufend angeordnet ist, um den Baum (18) zu schneiden,
und wobei die Sägekette (10) umfasst
- Glieder (20), die durch Verbindungselemente (19') miteinander verbunden sind, so dass die Sägekette (10) eine endlose Kettenschleife ist,
- als Glieder (20) Zahnglieder (21), von denen jedes einen seitlich am Außenumfang der Sägekette (10) hervorstehenden Schneidzahn (13) aufweist, und Antriebsglieder (12), die in der Nut (22) der Führungsschiene (11) am Innenumfang der Sägekette (10) angeordnet sind,
**dadurch gekennzeichnet, dass**,
- in der Sägekette (10) mehrere aufeinanderfolgende Zahnglieder (21) durch ein einzelnes Antriebsglied (12) an einem oder mehreren aufeinanderfolgenden Abschnitten der Sägekette (10) in einer Drehrichtung (S) der Sägekette (10) direkt miteinander verbunden sind,
- die Umlaufgeschwindigkeit der Sägekette (10) beim Schneiden eines Baumes (18) auf 20 - 35 m/s, vorzugsweise 25 - 33 m/s, ausgelegt ist.

2. Baumbearbeitungsvorrichtung gemäß dem Patentanspruch 1, **dadurch gekennzeichnet, dass** die Breite der Sägekette (10) 10 - 40 %, vorzugsweise 15 - 30 % größer ist als die Breite der Führungsschiene (11).

3. Baumbearbeitungsvorrichtung gemäß dem Patentanspruch 1 oder 2, **dadurch gekennzeichnet, dass** der Schnittwinkel des Schneidzahns (13) 0,5 - 7 Grad, vorzugsweise 0,5 - 6 Grad, besonders bevorzugt 0,5 - 5 Grad beträgt.

4. Baumbearbeitungsvorrichtung gemäß einem der Patentansprüche 1 - 3, **dadurch gekennzeichnet, dass** die Toleranz der Verbindungselemente (19') der Sägekette (10) so ausgelegt ist, dass die seitliche Verschiebung der Zahnglieder (21) begrenzt wird.

5. Baumbearbeitungsvorrichtung gemäß einem der Patentansprüche 1 - 4, **dadurch gekennzeichnet, dass** die Zahnglieder (21) einen Tiefenjustierungszahn (15) aufweisen und in den aufeinanderfolgenden Zahngliedern (21) der Tiefenjustierungszahn (15) des nachfolgenden Zahngliedes (21) an der Stelle der hinteren Kante (48) des Schneidzahnes (13) des vorangehenden Zahngliedes (20) angeordnet ist.

6. Baumbearbeitungsvorrichtung gemäß einem der Patentansprüche 1 - 5, **dadurch gekennzeichnet, dass** die Zahnglieder (21) einen Tiefenjustierungszahn (15) aufweisen und die Höhe des Tiefenjustierungszahns (15) 1 - 60 % der Höhe (H_{c}) der Schneidkante (24) des Schneidzahns (13) vom Fuß (60) des Schneidzahns (13) beträgt.

7. Baumbearbeitungsvorrichtung gemäß einem der Patentansprüche 1 - 6, bei der die Sägekette (10) durch eine Antriebsvorrichtung (16, 54) um die Führungsschiene (11) herumgeführt wird und die Führungsschiene (11) gegen den zu schneidenden Baum (18) gedreht wird, **dadurch gekennzeichnet, dass** die Drehung der Führungsschiene (11) gegen den zu schneidenden Baum (18) in Abhängigkeit von der Geschwindigkeit der Sägekette (10) oder einer dazu proportionalen Größe gesteuert wird.

8. Eine Mehrzweck-Bearbeitungsmaschine, die Folgendes umfasst
- eine motorisierte Basismaschine (30),
- eine Kabine (37), die an der Basismaschine (30) angebracht ist,
- einen Kran (32), der mit einer Reihe von Arbeitsauslegern (35) ausgestattet ist, die an der Basismaschine (30) angebracht sind,
- eine Baumbearbeitungsvorrichtung (40), die am Ende der Reihe der Arbeitsausleger (35) angebracht ist und Folgendes umfasst
- Greifmittel (41) zum Greifen des Baums (18), um ihn zu schneiden,
- eine Schneidvorrichtung (42), die eine drehbare Führungsschiene (11) umfasst, die mit einer Nut (22) versehen ist, in der die Sägekette (10) umlaufend angeordnet ist, um den Baum (18) zu schneiden,
**dadurch gekennzeichnet, dass** die Baumbearbeitungsvorrichtung (40) nach einem der Patentansprüche 1 bis 7 ausgeführt ist.

9. Mehrzweck-Bearbeitungsmaschine gemäß Patentanspruch 8, **dadurch gekennzeichnet, dass** die Mehrzweck-Bearbeitungsmaschine (31) mit einer Kabine (37) ausgestattet ist, in der sich eine Windschutzscheibe (38) befindet, die 5 - 15 mm dick ist.

10. Ein Verfahren zur Durchführung eines Schneidvorgangs einer Baumbearbeitungsvorrichtung, bei dem
- ein Baum (18) von der Baumbearbeitungsvorrichtung (40) gegriffen wird, bevor er geschnitten wird,
- der Baum (18) mit einer Sägekette (10) geschnitten wird, die in einer in einer drehbaren Führungsschiene (11) angeordneten Nut (22) umläuft und beim Schneiden eine Sägenut in dem Baum (18) bildet, und wobei die Sägekette (10)
- Glieder (20), die durch Verbindungselemente (19') miteinander verbunden sind, so dass die Sägekette (10) eine endlose Kettenschleife ist, die in der in der drehbaren Führungsschiene (11) angeordneten Nut (22) umläuft,
- als Glieder (20) Zahnglieder (21), von denen jedes einen Schneidzahn (13) aufweist, der seitlich von einer Seite des Außenumfangs der Sägekette (10) hervorsteht, und Antriebsglieder (12), die in der Nut (22) der Führungsschiene (11), am Innenumfang der Sägekette (10) angeordnet sind,
**dadurch gekennzeichnet, dass**
- der Lauf der Sägekette (10) in der von der Sägekette (10) im Baum (18) gebildeten Sägenut durch die aufeinanderfolgenden Zahnglieder (21) der Sägekette (10), die durch ein einziges Antriebsglied (12) direkt miteinander verbunden sind, ausgeglichen wird,
- beim Schneiden die Sägekette (10) mit einer Geschwindigkeit von 20 - 35 m/s, vorzugsweise 25 - 33 m/s, umläuft.

11. Verfahren gemäß dem Patentanspruch 10, bei dem zusätzlich im Zusammenhang mit dem Schneiden
- die Sägekette (10) durch eine Antriebseinrichtung (16, 54) um die Führungsschiene (11) herumgeführt wird,
- die Führungsschiene (11) gegen den zu schneidenden Baum (18) gedreht wird,
**dadurch gekennzeichnet, dass** die Drehung der Führungsschiene (11) gegen den zu schneidenden Baum (18) in Abhängigkeit von der Geschwindigkeit der Sägekette (10) oder einer dazu proportionalen Größe gesteuert wird.

## Revendications

1. Un dispositif de gestion d'arbre, qui comprend
- des moyens de préhension (41) pour la préhension d'un arbre (18) dans le but de le couper,
- un dispositif de coupe (42), qui comprend un guide-chaîne (11) rotatif équipé d'une rainure (22), dans laquelle la chaîne de scie (10) est agencée pour circuler afin de couper l'arbre (18),
et laquelle chaîne de scie (10) comprend
- des maillons (20) reliés entre eux par des éléments connecteurs (19'), de telle manière que la chaîne de scie (10) est une boucle de chaîne sans fin,
- en tant que maillons (20), des maillons dentés (21), dont chacun comprend une dent de coupe (13) en saillie latéralement sur la circonférence extérieure de la chaîne de scie (10), et des maillons d'entraînement (12), qui sont disposés dans la rainure (22) du guide-chaîne (11) sur la circonférence intérieure de la chaîne de scie (10),
**caractérisé en ce que**
- dans la chaîne de scie (10), plusieurs maillons dentés (21) consécutifs sont reliés directement entre eux par un un seul maillon d'entraînement (12) dans une ou plusieurs sections consécutives de la chaîne de scie (10), dans le sens de la rotation (S) de la chaîne de scie (10),
- la vitesse de circulation de la chaîne de scie (10) pendant la coupe de l'arbre (18) est agencée pour être de 20 à 35 m/s, de préférence de 25 à 33 m/s.

2. Dispositif de gestion d'arbre selon la revendication 1, **caractérisé en ce que** la largeur de la chaîne de scie (10) est de 10 à 40 %, de préférence de 15 à 30 % supérieure à la largeur du guide-chaîne (11).

3. Dispositif de gestion d'arbre selon la revendication 1 ou 2, **caractérisé en ce que** l'angle d'attaque de la dent de coupe (13) est de 0,5 à 7 degrés, de préférence de 0,5 à 6 degrés, idéalement de 0,5 à 5 degrés.

4. Dispositif de gestion d'arbre selon l'une quelconque des revendications 1 à 3, **caractérisé en ce que** la tolérance des éléments connecteurs (19') de la chaîne de scie (10) est agencée pour limiter le déplacement latéral des maillons dentés (21).

5. Dispositif de gestion d'arbre selon l'une quelconque des revendications 1 à 4, **caractérisé en ce que** les maillons dentés (21) comprennent une dent de réglage de profondeur (15) et dans les maillons dentés (21) consécutifs la dent de réglage de profondeur (15) du maillon denté (21) suivant est agencée à l'endroit du bord arrière (48) de la dent de coupe (13) du maillon denté précédent (20).

6. Dispositif de gestion d'arbre selon l'une quelconque des revendications 1 à 5, **caractérisé en ce que** les maillons dentés (21) comprennent une dent de réglage de profondeur (15) et la hauteur de la dent de réglage de profondeur (15) est de 1 à 60 % de la hauteur (H_{c}) du bord coupant (24) de la dent de coupe (13) depuis la base (60) de la dent de coupe (13).

7. Dispositif de gestion d'arbre selon l'une quelconque des revendications 1 à 6, dans lequel la chaîne de scie (10) est agencée pour être circulée autour du guide-chaîne (11) par un dispositif d'entraînement (16, 54) et le guide-chaîne (11) est agencé pour être tourné contre l'arbre (18) étant coupé, **caractérisé en ce que** la rotation du guide-chaîne (11) contre l'arbre (18) étant coupé est agencée pour être commandée sur la base de la vitesse de la chaîne de scie (10) ou d'une variable qui lui est proportionnelle.

8. Une abatteuse, qui comprend
- une machine de base motorisée (30),
- une cabine (37) installée sur la machine de base (30),
- une grue (32), équipée d'un jeu de flèches de travail (35), installée sur la machine de base (30),
- un dispositif de gestion d'arbre (40), installé à l'extrémité du jeu de flèches de travail (35), qui comprend
- des moyens de préhension (41) pour la préhension de l'arbre (18) dans le but de le couper,
- un dispositif de coupe (42), qui comprend un guide-chaîne (11) rotatif équipé d'une rainure (22), dans laquelle une chaîne de scie (10) est agencée pour circuler afin de couper l'arbre (18),
**caractérisé en ce que** le dispositif de gestion d'arbre (40) est selon l'une quelconque des revendications 1 à 7.

9. Abatteuse selon la revendication 8, **caractérisée en ce que** l'abatteuse (31) est équipée d'une cabine (37), dans laquelle il y a un pare-brise (38) dont l'épaisseur est de 5 à 15 mm.

10. Un procédé pour agencer l'opération de coupe d'un dispositif de gestion d'arbre, dans lequel
- un arbre (18) est saisi par le dispositif de gestion d'arbre (40) avant d'être coupé,
- l'arbre (18) est coupé à l'aide d'une chaîne de scie (10), laquelle est circulée dans une rainure (22) agencée dans un guide-chaîne (11) rotatif et lors de laquelle coupe une entaille de sciage est formée dans l'arbre (18), et laquelle chaîne de scie (10) comprend
- des maillons (20) reliés entre eux par des éléments connecteurs (19'), de telle manière que la chaîne de scie (10) est une boucle de chaîne sans fin, qui circule dans la rainure (22) agencée dans le guide-chaîne (11) rotatif,
- en tant que maillons (20), des maillons dentés (21), dont chacun comprend une dent de coupe (13) en saillie latéralement sur un côté de la circonférence extérieure de la chaîne de scie (10), et des maillons d'entraînement (12), qui sont dans la rainure (22) du guide-chaîne (11), sur la circonférence intérieure de la chaîne de scie (10),
**caractérisé en ce que**
- la course de la chaîne de scie (10) dans l'entaille de sciage étant formée dans l'arbre (18) par la chaîne de scie (10) est égalisée par les maillons dentés (21) consécutifs de la chaîne de scie (10), qui sont reliés directement entre eux par un seul maillon d'entraînement (12),
- lors de la coupe, la chaîne de scie (10) est circulée à une vitesse de 20 à 35 m/s, de préférence de 25 à 33 m/s.

11. Procédé selon la revendication 10, dans lequel en outre en liaison avec la coupe
- la chaîne de scie (10) est circulée autour du guide-chaîne (11) par un dispositif d'entraînement (16, 54),
- le guide-chaîne (11) est tourné contre l'arbre (18) étant coupé,
**caractérisé en ce que** la rotation du guide-chaîne (11) contre l'arbre (18) étant coupé est commandée sur la base de la vitesse de la chaîne de scie (10) ou d'une variable qui lui est proportionnelle.
